Europäisches Patentamt

European Patent Office

Office européen des brevets

(19)

(11) **EP 0 849 434 B1**

(12) **EUROPEAN PATENT SPECIFICATION**

(45) Date of publication and mention
of the grant of the patent:
**27.04.2005 Bulletin 2005/17**

(51) Int Cl.7: **F01D 5/02**, F01D 5/06,
F01D 5/12, F01K 23/16

(21) Application number: **98101285.9**

(22) Date of filing: **01.02.1990**

(54) **Heat resisting steam turbine rotor**

Hitzebeständiger Dampfturbinenrotor

Rotor réfractaire pour turbine à vapeur

(84) Designated Contracting States:
**CH DE FR GB LI**

(30) Priority: **03.02.1989 JP 2389089**
**22.05.1989 JP 12662289**

(43) Date of publication of application:
**24.06.1998 Bulletin 1998/26**

(62) Document number(s) of the earlier application(s) in
accordance with Art. 76 EPC:
**90102007.3 / 0 384 181**

(73) Proprietor: **Hitachi, Ltd.**
**Tokyo (JP)**

(72) Inventors:
• **Siga, Masao**
**Ibaraki-ken, (JP)**
• **Fukui, Yutaka**
**Hitachi-shi (JP)**
• **Kuriyama, Mitsuo**
**Ibaraki-ken (JP)**
• **Maeno, Yoshimi**
**Hitachi-shi (JP)**
• **Suwa, Masateru**
**Ibaraki-ken (JP)**
• **Kaneko, Ryoichi**
**Hitachi-shi (JP)**
• **Onoda, Takeshi**
**Hitachi-shi (JP)**

• **Kajiwara, Hidefumi**
**Katsuta-shi (JP)**
• **Watanabe, Yasuo**
**Katsuta-shi (JP)**
• **Takahashi, Shintaro**
**Hitachi-shi (JP)**
• **Tan, Toshimi**
**Katsuta-shi (JP)**

(74) Representative: **Beetz & Partner Patentanwälte**
**Steinsdorfstrasse 10**
**80538 München (DE)**

(56) References cited:
**DE-A- 2 923 288** **US-A- 4 519 207**

• **PATENT ABSTRACTS OF JAPAN vol. 008, no.
212 (C-244), 27 September 1984 (1984-09-27) &
JP 59 096248 A (TOSHIBA KK), 2 June 1984
(1984-06-02)**
• **HAUSERMANN A ET AL: "STEAM TURBINES OF
MEDIUM OUTPUT IN INDUSTRY AND POWER
PLANTS: EXPERIENCE IN HANDLING
CONTRACTS AND IN OPERATION" BROWN
BOVERI REVIEW, BROWN BOVERI AND CO.
BADEN, CH, no. 5, 1 April 1980 (1980-04-01),
pages 277-291, XP000611048**
• **PATENT ABSTRACTS OF JAPAN vol. 012, no.
028 (C-471), 27 January 1988 (1988-01-27) & JP
62 180030 A (HITACHI LTD), 7 August 1987
(1987-08-07)**

**Description**

The invention relates to a combined generator system having a gas turbine, a steam turbine of integrated high and low pressure type and a generator.

A steam turbine having a large capacity comprises a high pressure portion, an intermediate pressure portion, and a low pressure portion in accordance with the steam conditions thereof, and high and intermediate pressure rotors are fabricated from Cr-Mo-V steel and a low pressure rotor is fabricated from 3.5 Ni-Cr-Mo-V steel.

Turbines having a small capacity less than 100,000 KW and an intermediate capacity of 100,000 to 300,000 KW have a rotor relatively small in size and thus if a material having both the advantages of the above materials used in the high and low pressure rotors is available, the high and the low pressure portions thereof can be integrated (fabricated from the same material). This integration makes the turbine compact as a whole and the cost thereof is greatly reduced. Examples of materials of a rotor having integrated high and low pressure portions are disclosed in the JP-B 58-11504 and in the JP-A 54-40225 and in the JP-A 60-224766.

If the high and low pressure portions are integrated by using the currently available rotor materials, i.e., Cr-Mo-V steel or Ni-Cr-Mo-V steel, the former cannot provide safety against the brittle fracture of the low pressure portion, because it is inferior in low temperature toughness, while the latter cannot provide safety against the creep fracture of the high pressure portion because it is inferior in high temperature strength.

The JP-B 58-11504 discloses a rotor integrating high and low pressure portions fabricated from a material consisting, by weight, of 0.15 to 0.3 % C, not more than 0.1 % Si, not more than 1.0 % Mn, 0.5 to 1.5 % Cr, 0.5 to 1.5 % Ni, not more than 1.5 % but more than 0.5 % Mo, 0.15 to 0.30 % V, 0.01 to 0.1 % Nb, and the balance Fe, but it does not exhibit sufficient toughness after heated at a high temperature for a long time and thus long blades having a length not less than 30 inches cannot be planted thereon.

The JP-A 60-224766 discloses a steam turbine rotor fabricated from a material consisting, by weight, of 0.10 to 0.35 % C, not more than 0.10 % Si, not more than 1.0 % Mn, 1.5 to 2.5 % Ni, 1.5 to 3.0 % Cr, 0.3 to 1.5 % Mo, 0.05 to 0.25 % V, and the balance Fe, and further discloses that this material may contain 0.01 to 0.1 % Nb, and 0.02 to 0.1 % N. This rotor, however, is inferior in creep rupture strength.

The JP-A 62-189301 discloses a steam turbine integrating high and low pressure portions, which, however, uses a rotor shaft fabricated by mechanically combining a material superior in high temperature strength but inferior in toughness and a material superior in toughness but inferior in high temperature strength, and thus it is not fabricated from a material having the same component. This mechanical combination requires a large structure to obtain strength and thus the rotor shaft cannot be made small in size and, in addition, the reliability is impaired.

US 4 519 207 discloses a combined generator system comprising a generator simultaneously driven by a gas turbine, a high pressure steam turbine and a low pressure steam turbine. The exhaust gases of the gas turbine are supplied to a recovery boiler which comprises a high pressure steam generator and a low pressure steam generator. In the start-up operation of the system the high pressure steam is supplied to a condenser through a bypass line and a bypass valve. The exhaust steam of the steam turbines flows to the condenser, to a feed water pump, and into the recovery boiler. In the normal operation the inlet steam temperature of the high pressure turbine is about 500°C or higher and the outlet steam temperature is about 50°C.

The present invention provides a combined generator system as defined in claim 1, by which a single generator is simultaneously driven by a steam turbine and a gas turbine, wherein the steam turbine has a rotor provided with multi-stage blades planted on the integrated rotor shaft thereof from a high pressure side to a low pressure side of steam and a casing covering the rotor, a temperature at the steam inlet of the steam turbine is not less than 530 °C and a temperature at the steam outlet thereof is not more than 100 °C, the casing is integrally arranged from the high pressure side of the blades to the low pressure side thereof, the steam inlet is disposed upstream of the first stage of the above blades and the steam outlet is disposed downstream of the final stage of the above blades to enable the above steam to flow in one direction, and the above blades on the low pressure side have a length not less than 762 mm (30 inches).

In this generator system the steam turbine has a reduced axial length and an integrated rotor shaft of superior high temperature strength and less heating embrittlement.

The rotor shaft of the steam turbine being fabricated from a Ni-Cr-Mo-V low alloy steel having a bainite structure, wherein a ratio (Mn/Ni) is not more than 0.12 or a ratio (Si + Mn)/Ni is not more than 0.18 by weight and a 538 °C, 100,000 hour creep rupture strength is not less than 11 kg/mm$^2$.

The above rotor shaft is fabricated from Ni-Cr-Mo-V low alloy steel having a bainite structure and containing, by weight, 0.15 to 0.4 % C, not more than 0.1 % Si, 0.05 to 0.25 % Mn, 1.5 to 2.5 % Ni, 0.8 to 2.5 % Cr, 0.8 to 2.5 % Mo, and 0.1 to 0.3 % V, wherein a ratio (Mn/Ni) is not more than 0.12 or a ratio (Si + Mn)/Ni is not more than 0.18. The rotor shaft is provided at the center thereof with FATT of a temperature not more than the steam outlet temperature and is made of Ni-Cr-Mo-V low alloy steel having a bainite structure and having 100,000 hour creep rupture strength not less than 11 kg/mm$^2$, and more preferably not less than 12 kg/mm$^2$ at the steam outlet temperature and at 538 °C.

The V-shaped notch impact value is not less than 3,0 kg-m/cm$^2$ after the rotor shaft has been heated at 500 °C for 1,000 hours.

The steam turbine used in a generator system according to the invention has a steam inlet temperature not less than 530°C at the steam inlet of the first stage blades thereof and a steam outlet temperature not more than 100°C at the steam outlet of the final stage blades thereof, a ratio (L/D) of a length (L) between bearings of the rotor shaft to a diameter (D) measured between the extreme ends of the final blade portion is 1.4 to 2.3, and the blades at least at the final stage thereof have a length not less than 30 inches.

The above rotor shaft is fabricated from Ni-Cr-Mo-V low alloy steel having a bainite structure, and this low alloy steel has high temperature strength withstanding the above steam temperature not less than 530°C and impact value withstanding impacts occurring when the above blades having a length at least 30 inches are planted.

The above blades on a low pressure side have a length not less than 762 mm (30 inches), the blades on a high pressure side are fabricated from high-Cr martensitic steel having creep rupture strength superior to that of the material of the blades on the low pressure side, and the blades on the low pressure side are fabricated from high-Cr martensitic steel having toughness higher than that of the material of the blades on the high pressure side.

The above-mentioned blades having a length not less than 762 mm (30 inches) are fabricated from martensitic steel containing by weight 0.08 to 0.15% C, not more than 0.5% Si, not more than 1.5% Mn, 10 to 13% Cr, 1.0 to 2.5% Mo, 0.2 to 0.5% V and 0.02 to 0.1% N, while the above-mentioned blades on the high pressure side are fabricated from martensitic steel containing by weight 0.2 to 0.3% C, not more than 0.5% Si, not more than 1% Mn, 10 to 13% Cr, not more than 0.5% Ni, 0.5 to 1.5% Mo, 0.5 to 1.5% W and 0.15 to 0.35% V, and the above blades on the low pressure side having a length not more than 30 inches are fabricated from martensitic steel consisting, by weight, of 0.05 to 0.15% C, not more than 0.5% Si, not more than 1% and preferably 0.2 to 1.0% Mn, 10 to 13% Cr, not more than 0.5% Ni, not more than 0.5% Mo, and the balance Fe and incidental impurities.

The leading edge portion at the extreme end of the above blades having a length not less than 762 mm (30 inches) is preferably provided with an erosion-preventing layer. The blade practically has a length of 850 mm (33.5 inches), 1016 mm (40 inches), 1181 mm (46.5 inches) and so forth.

In the steam turbine having a rotor provided with multi-stage blades planted on the integrated rotor shaft thereof from a high pressure side to a low pressure side of steam and a casing covering the rotor, the steam can flow in different directions when comparing the case of the high pressure side with the low pressure side.

The stationary blades of the steam turbine are fabricated from an annealed wholly martensitic steel consisting, by weight, of 0.05 to 0.15 % C, not more than 0.5 % Si, 0.2 to 1 % Mn, 10 to 13 % Cr, not more than 0.5 % Ni, not more than 0.5 % Mo, and the balance Fe and incidental impurities.

A casing of the steam turbine is fabricated from a Cr-Mo-V cast steel having a bainite structure and containing by weight 0.15 to 0.30 % C, more than 0.5 % Si, 0.05 to 1.0 % Mn, 1 to 2 % Cr, 0.5 to 1.5 % Mo, 0.05 to 0.2 % V and not more than 0.05 % Ti.

The heat resisting Ni-Cr-Mo-V steel of the rotor shaft of the steam turbine having a bainite structure can contain by weight 0.15 to 0.4 % C, not more than 0.1 % Si, 0.05 to 0.25 % Mn, 1.5 to 2.5 % Ni, 0.8 to 2.5 % Cr, 0.8 to 2.5 % Mo, and 0.10 to 0.35 % V, wherein a ratio Mn/Ni is not more than 0.12 or a ratio (Si + Mn)/Ni is not more than 0.18.

Said heat resisting Ni-Cr-Mo-V steel can contain 0.10 to 0.30 % V, and 0.001 to 0.1 % in total at least one selected from the group consisting of Al, Zr, Ca, and rare earth elements, wherein a ratio Mn/Ni is not more than 0.12 or a ratio (Si + Mn)/Ni is not more than 0.18.

The heat resisting Ni-Cr-Mo-V steel of the rotor shaft of the steam turbine mainly having a bainite structure can contain by weight 0.15 to 0.4 % C, not more than 0.1 % Si, 0.05 to 0.25 % Mn, 1.5 to 2.5 % Ni, 0.8 to 2.5 % Cr, 0.8 to 2.5 % Mo, 0.10 to 0.30 % V, and 0.005 to 0.15 % at least one selected from the group consisting of Nb and Ta, wherein a ratio (Mn/Ni) is not more than 0.12 or a ratio (Si + Mn)/Ni is not more than 0.18.

The heat resisting Ni-Cr-Mo-V steel of the rotor shaft of the steam turbine having a bainite structure can contain by weight 0.15 to 0.4 % C, not more than 0.1 % Si, 0.05 to 0.25 % Mn, 1.5 to 2.5 % Ni, 0.8 to 2.5 % Cr, 0.8 to 2.5 % Mo, 0.10 to 0.30 % V, 0.001 to 0.1 % in total at least one selected from the group consisting of Al, Zr, Ca, and rare earth elements, and 0.005 to 0.15 % at least one selected from the group consisting of Nb and Ta, wherein a ratio (Mn/Ni) is not more than 0.12 or a ratio (Si + Mn)/Ni

A Ni-Cr-Mo-V low alloy steel consisting, by weight, of 0.15 to 0.4% C, not more than 0.1% Si, 0.05 to 0.5% Mn, 1.6 to 2.5% Ni, 0.8 to 2.5% Cr, 0.8 to 2.5% Mo, 0.1 to 0.5% V, at least one selected from the group consisting of 0.005 to 0.15% Nb, 0.005 to 0.15% Ta, 0.001 to 0.1% Al, 0.001 to 0.1% Zr, 0.001 to 0.1% Ca, 0.001 to 0.1% rare earth elements, 0.1 to 1.0% W, 0.001 to 0.1% Ti, 0.001 to 0.1% B, and the substantial balance Fe and incidental impurities, wherein a ratio (V + Mo)/(Ni + Cr) is 0.45 to 0.7 can be used as material of a rotor shaft integrating high and low pressure portions.

These rotor shafts are applied to a steam turbine according to the present invention.

Further, an amount of oxygen contained in the above Cr-Mo-V low alloy steels is preferably not more than 25 ppm.

A method of manufacturing the Cr-Mo-V steel having the composition described above comprises the steps of forming a steel ingot thereof particularly by melting the ingot by electroremelting or in an arc furnace under an atmospheric air and then by deoxidizing the same through carbon under vacuum, hot forging the steel ingot, quenching the steel ingot in such a manner that it is heated to an austenizing temperature and then cooled at a predetermined cooling speed, and annealing the steel ingot, the Cr-Mo-V steel mainly having a bainite structure.

Preferably, the quenching temperature is 900 to 1000°C and an annealing temperature is 630 to 700°C.

A steam turbine according to the present invention is most suitably applied to a thermal power plant having an intermediate capacity of 100,000 to 300,000 KW from a view point that it is compact in size and has an improved thermal efficiency. In particular, the steam turbine is provided with the longest blades having a length of 850 mm (33.5 inches)and at least ninety pieces of the blades can be planted around the overall circumference thereof.

[Operation]

The component of the low alloy steel constituting the steam turbine rotor of the present invention and the reason why heat treatment conditions are limited are explained below.

Carbon is an element necessary to improve quenching ability and to obtain strength. When an amount thereof is not more than 0.15%, sufficient quenching ability cannot be obtained and a soft ferritic structure occurs about the center of the rotor, so that sufficient tensile strength and yield strength can not be obtained. When a content thereof is not less than 0.4%, it reduces toughness. Thus, the carbon is limited to a range from 0.15 to 4.0%, and, in particular, preferably limited to a range from 0.20 to 0.28%.

Although silicon and manganese are conventionally added as a deoxidizer, a rotor superior in quality can be produced without the addition thereof when a steel making technology such as a vacuum carbon deoxidation method or an electro-slug melting method is used. A content of Si and Mn must be made as low as possible from a view point that the rotor is made brittle when it is operated for a long time, and thus the amounts thereof are limited to not more than 0.1% and 0.5%, respectively, and in particular, $Si \leqq 0.05\%$ and $Mn \leqq 0.25\%$ are preferable and $Mn \leqq 0.15\%$ is more preferable. Mn not less than 0.05% acts as a desulfurizing agent and is necessary to enhance hot workability. Thus, the lower limit of Mn is 0.05%.

Nickel is indispensable to improve quenching ability and toughness. A content thereof less than 1.5% is not sufficient to obtain an effect for improving toughness. An addition of a large amount thereof exceeding 2.5% lowers creep rupture strength. In particular, preferably an amount thereof is in a range from 1.6 to 2.0%.

Chromium improves quenching ability, toughness, and strength, and also improves corrosion resistance in steam. A content thereof less than 0.8% is not sufficient to exhibit an effect for improving them, and an addition thereof exceeding 2.5% lowers creep rupture strength. In particular, preferably an content thereof is in a range from 1.2 to 1.9%.

Molybdenum precipitates fine carbide in crystal grains while an annealing processing is carried out, with a result that it has an effect for improving high temperature strength and preventing embrittlement caused by annealing. A content thereof less than 0.8% is not sufficient to exhibit this effect, and an addition of a large amount thereof exceeding 2.5% reduces toughness. In particular, preferably a content thereof is in a range from 1.2 to 1.5% from a view point of toughness and preferably a content thereof is in a range exceeding 1.5% but not more than 2.0% from a view point of strength.

Vanadium precipitates fine carbide in crystal grains while an annealing processing is carried out with a result that it has an effect for improving high temperature strength and toughness. A content thereof less than 0.1% is not sufficient to exhibit this effect, but an addition thereof exceeding 0.3% saturates the effect. In particular, preferably the content thereof is in a range from 0.20% to 0.25%.

It has been experimentally clarified that the above-mentioned nickel, chromium, vanadium, and molybdenum are greatly concerned with toughness and high temperature strength and act in combination in the invented steel. More specifically, to obtain a material superior in both high temperature strength and low temperature toughness, a ratio of a sum of vanadium and molybdenum, which are carbide creating elements and which have an effect for improving high temperature strength, to a sum of nickel and chromium, which have an effect for improving quenching ability and toughness, preferably satisfies the equation $(V + Mo)/(Ni + Cr) = 0.45$ to 0.7.

When low alloy steel composed of the above component is manufactured, an addition of any of rare earth elements, calcium, zirconium, and aluminum improves the toughness thereof. An addition of rare earth elements less than 0.005% is not sufficient to exhibit an effect for improving the toughness, but an addition thereof exceeding 0.4% saturates the effect. Although an addition of a small amount of Ca improves the toughness, an amount thereof less than 0.0005% does not exhibit an effect for improvement, but an addition thereof exceeding 0.01% saturates the effect. An addition of Zr less than 0.01% is not sufficient to exhibit an effect for improving the toughness, but an addition thereof exceeding 0.2% saturates the effect. An addition of Al less than 0.001% is not sufficient to exhibit an effect for improving the toughness, but an addition thereof exceeding 0.02% lowers creep rupture strength.

Further, oxygen is concerned with high temperature strength, and superior creep rupture strength can be

obtained by controlling an amount of $O_2$ in a range from 5 to 25 ppm in the invented steel.

At least one of niobium and tantalum is added in an amount of 0.005 to 0.15%. A content thereof less than 0.005% is not sufficient to exhibit an effect for improving strength, whereas when a content thereof exceeds 0.15% the huge carbides thereof are crystallized in such a large structure as a steam turbine rotor, whereby strength and toughness are lowered, and thus this content is in a range from 0.005 to 0.15%. In particular, preferably the content is in a range from 0.01 to 0.05%.

Tungsten is added in an amount not less than 0.1% to increase strength. This amount must be in a range from 0.1 to 1.0%, because when the amount exceeds 1.0%, a problem of segregation arises in a large steel ingot by which strength is lowered, and preferably the amount is in a range from 0.1 to 0.5%.

A ratio Mn/Ni or a ratio (Si + Mn)/Ni must be not more than 0.12 and not more than 0.18, respectively, whereby Ni-Cr-Mo-V low alloy steel having a bainitic structure is greatly prevented from being subjected to heating embrittlement, with the result that the low alloy steel is applicable to a rotor shaft integrating low and high pressure portions.

The steel having the characteristics superior in both creep rupture strength and high impact value can be obtained by setting a ratio (V + Mo)/(Ni + Cr) to 0.45 to 0.7, whereby blades each having a length not less than 762 mm (30 inches) can be planted on the rotor shaft integrating high and low pressure portions according to the present invention.

The application of the above new material to a rotor shaft enables long blades having a length of not less than 762 mm (30 inches) to be planted on the rotor shaft as final stage blades, and the rotor shaft can be made compact such that a ratio (L/D) of a length (L) thereof between bearings to a blade diameter (D), is made to 1.4 to 2.3, and preferably the ratio is made to 1.6 to 2.0. Further, a ratio of the maximum diameter (d) of the rotor shaft to a length ($\ell$) of final long blades can be made to 1.5 to 2.0. With this arrangement, an amount of steam can be increased to the maximum thereof in accordance with the characteristics of the rotor shaft, whereby a large amount of power can be generated by a small steam turbine. In particular, preferably this ratio is 1.6 to 1.8. A ratio not less than 1.5 is determined from the number of blades, and the greater the ratio, the better the result can be obtained, but preferably the ratio is not more than 2.0 from a view point of strength with respect to a centrifugal force.

A steam turbine using the rotor shaft integrating high and low pressure portions according to the present invention is small in size, and capable of generating power of 100,000 to 300,000 KW and making a distance thereof between bearings very short, i.e., not more than 0.8 m per 10, 000 KW of generated power. Preferably, the distance is 0.25 to 0.6 m per 10,000 KW.

The application of the above Cr-Mo-V low alloy steel to a rotor shaft integrating high and low pressure portions enables movable blades having a length of not less than 762 mm (30 inches)and in particular not less than 850 mm (33.5 inches) to be planted at a final stage, whereby an output from a single turbine can be increased and the turbine can be made small in size.

According to the present invention, since a steam turbine integrating high and low pressure portions provided with long blades not less than 762 mm (30 inches)can be manufactured, an output from a single turbine, which is small in size, can be greatly increased. Further, there is an effect in that a power generating cost and a cost for constructing a power plant are reduced. Furthermore, according to the present invention, a rotor shaft having superior high temperature strength and less heat embrittlement and superior heat resisting steel can be obtained, and in particular a rotor shaft integrating high and low pressure portions on which blades having a length not less than 762 mm (30 inches) are planted can be obtained.

BRIEF DESCRIPTION OF THE INVENTION

Figures 1, 8, and 9 are partial cross sectional views of a steam turbine using a rotor shaft integrating high and low pressure portions according to the present invention;
Figure 2 is a graph showing a relationship between a ratio (V + Mo)/(Ni + Cr), and creep rapture strength and impact value;
Figure 3 is a graph showing a relationship between creep rapture strength and oxygen;
Figure 4 is a graph showing a relationship between creep rapture strength and Ni; and
Figure 5 to Figure 7 are graphs showing relationships between a V-shaped notch impact value, and Ni, Mn, Si + Mn, a ratio Mn/Ni, and a ratio (Si + Mn)/Ni.

PREFERRED EMBODIMENTS OF THE INVENTION

EXAMPLE 1

A turbine rotor according to the present invention is described below with reference to examples. Table 1 shows chemical compositions of typical specimens subjected to toughness and creep rapture tests. The specimens were obtained in such a manner that they were melted in a high frequency melting furnace, made to an ingot, and hot forged to a size of 30 mm square at a temperature from 850 to 1150°C. The specimens Nos. 1, 3 and 7 to 11 are materials according to the present invention. The specimens Nos. 2, 4 to 6 were prepared for the comparison with the invented materials. The specimen No. 5 is a material corresponding to ASTM A470 Class 8 and the specimen No. 6 is a material corresponding to ASTM A470 Class 7. These specimens were quenched in such a manner that they were made to have austenitic structure by being heated to 950°C in accordance with a simulation of the conditions of the center of a rotor shaft integrating high and low pressure portions of a steam turbine, and then cooled at a speed of 100°C/h. Next, they were annealed by being heated at 665°C for 40 hours and cooled in a furnace. Cr-Mo-V steels according to the present invention included no ferrite phase and were made to have a bainite structure as a whole.

An austenitizing temperature of the invented steels must be 900 to 1000°C. When the temperature is less than 900°C, creep rapture strength is lowered, although superior toughness can be obtained. When the temperature exceeds 1000°C, toughness is lowered, although superior creep rapture strength can be obtained. An annealing temperature must be 630 to 700°C. If the temperature is less than 630°C, superior toughness cannot be obtained, and when it exceeds 700°C, superior creep strength cannot be obtained.

Table 2 shows the results of a tensile strength test, impact test, and creep rupture test. Toughness is shown by Charpy impact absorbing energy of a V-shaped notch tested at 20°C. Creep rupture strength is determined by Larason Mirror method and shown by a strength obtained when a specimen was heated at 538°C for 100,000 hours. As apparent from Table 2, the invented materials have a tensile strength not less than 88 $kg/mm^2$ at a room temperature, a 0.2% yield strength not less than 70 $kg/mm^2$, an FATT not more than 40°C, an impact absorbing energy not less than 2.5 kg-m both before they were heated and after they had been heated, and a creep rapture strength not less than about 11 $kg/mm^2$, and thus they are very useful for a turbine rotor integrating high and low pressure portions. In particular, a material having a strength not less than 15 $kg/mm2$ is preferable to plant long blades of 850 mm.

Table 1

| Specimen No. | Composition (wt%) | | | | | | | | | | $\dfrac{V+Mo}{Ni+Cr}$ | Mn/Ni | $\dfrac{Si+Mn}{Ni}$ |
|---|---|---|---|---|---|---|---|---|---|---|---|---|---|
| | C | Si | Mn | P | S | Ni | Cr | Mo | V | | | | |
| 1 | 0.29 | 0.08 | 0.18 | 0.012 | 0.012 | 1.85 | 1.20 | 1.21 | 0.22 | — | 0.47 | 0.097 | 0.141 |
| 2 | 0.24 | 0.06 | 0.07 | 0.007 | 0.010 | 1.73 | 1.38 | 1.38 | 0.27 | — | 0.53 | 0.040 | 0.075 |
| 3 | 0.27 | 0.04 | 0.15 | 0.007 | 0.009 | 1.52 | 1.09 | 1.51 | 0.26 | — | 0.68 | 0.099 | 0.125 |
| 4 | 0.30 | 0.06 | 0.19 | 0.008 | 0.011 | 0.56 | 1.04 | 1.31 | 0.26 | — | 0.98 | 0.339 | 0.446 |
| 5 | 0.33 | 0.27 | 0.77 | 0.007 | 0.010 | 0.34 | 1.06 | 1.28 | 0.27 | — | 1.11 | 2.265 | 3.059 |
| 6 | 0.23 | 0.05 | 0.30 | 0.009 | 0.012 | 3.56 | 1.66 | 0.40 | 0.12 | — | 0.10 | 0.084 | 0.098 |
| 7 | 0.31 | 0.07 | 0.15 | 0.007 | 0.009 | 2.00 | 1.15 | 1.32 | 0.22 | — | 0.49 | 0.075 | 0.110 |
| 8 | 0.26 | 0.06 | 0.17 | 0.007 | 0.008 | 1.86 | 1.09 | 1.41 | 0.24 | La+Ce 0.20 | 0.56 | 0.091 | 0.124 |
| 9 | 0.25 | 0.07 | 0.17 | 0.010 | 0.010 | 1.72 | 1.40 | 1.42 | 0.24 | Ca 0.005 | 0.53 | 0.099 | 0.140 |
| 10 | 0.24 | 0.05 | 0.13 | 0.009 | 0.007 | 1.73 | 1.25 | 1.39 | 0.25 | Zr 0.04 | 0.55 | 0.075 | 0.104 |
| 11 | 0.26 | 0.03 | 0.09 | 0.008 | 0.009 | 1.71 | 1.23 | 1.45 | 0.23 | Al 0.01 | 0.57 | 0.052 | 0.070 |
| 12 | 0.29 | 0.09 | 0.23 | 0.013 | 0.009 | 1.70 | 1.06 | 1.32 | 0.25 | — | 0.57 | 0.135 | 0.188 |
| 13 | 0.29 | 0.21 | 0.33 | 0.012 | 0.007 | 1.74 | 1.04 | 1.20 | 0.23 | — | 0.51 | 0.190 | 0.310 |
| 14 | 0.31 | 0.25 | 0.90 | 0.010 | 0.007 | 1.86 | 1.06 | 1.29 | 0.22 | — | 0.52 | 0.484 | 0.618 |

EP 0 849 434 B1

## Table 2

Value in parenthesis: after heated at 500°C for 3000 h

| Specimen No. | Tensile strength (kg/mm²) | 0.02% yield strength (kg/mm²) | Elonga-tion (%) | Contrac-tion of area (%) | Impact absorbing energy (kg-m) | 50% FATT (°C) | 538°C Creep rapture strength (kgf/mm2) |
|---|---|---|---|---|---|---|---|
| 1 | 92.4 | 72.5 | 21.7 | 63.7 | 3.5 (3.3) | 30 | 12.5 |
| 2 | 92.5 | 72.6 | 21.3 | 62.8 | 3.3 (3.0) | 39 | 15.6 |
| 3 | 90.8 | 71.4 | 22.5 | 64.0 | 2.8 (2.7) | 38 | 18.4 |
| 4 | 90.8 | 71.9 | 20.4 | 61.5 | 1.2 | 119 | 15.5 |
| 5 | 88.1 | 69.2 | 20.1 | 60.8 | 1.3 | 120 | 14.6 |
| 6 | 72.4 | 60.1 | 25.2 | 75.2 | 12.0 | -20 | 5.8 |
| 7 | 89.9 | 70.3 | 22.3 | 64.5 | 3.6 (3.3) | 29 | 10.8 |
| 8 | 90.8 | 70.7 | 21.9 | 63.9 | 4.2 | 21 | 14.8 |
| 9 | 91.0 | 71.4 | 21.7 | 63.5 | 3.9 | 25 | 15.1 |
| 10 | 92.0 | 72.2 | 20.9 | 62.2 | 3.7 | 34 | 15.6 |
| 11 | 90.6 | 71.1 | 21.5 | 61.8 | 3.7 | 36 | 15.5 |
| 12 | - | - | - | - | 3.0 (2.4) | - | - |
| 13 | - | - | - | - | 3.4 (2.4) | - | - |
| 14 | - | - | - | - | 3.6 (2.3) | - | - |

EP 0 849 434 B1

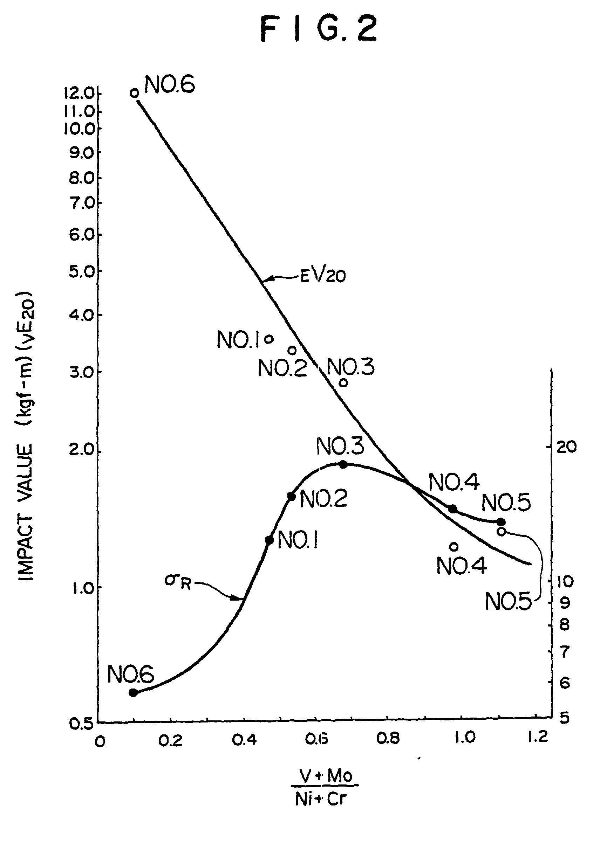

Fig. 2 shows a relationship between a ratio of a sum of V and Mo acting as carbide creating elements to a sum of Ni and Cr acting as quenching ability improving elements, and creep rupture strength and impact absorbing energy. The creep rupture strength is increased as the component ratio (V + Mo)/(Ni + Cr) is increased until it becomes about 0.7. It is found that the impact absorbing energy is lowered as the component ratio is increased. It is found that the toughness (vE20 $\geqq$ 2.5 kg/m) and the creep rupture strength (6R $\geqq$ 11 kg/mm$^2$) necessary as the characteristics of a material forming the turbine rotor integrating high and low pressure portions are obtained when (V + Mo)/(Ni + Cr) = 0.45 to 0.7. Further, to examine the brittle characteristics of the invented material No. 2 and the comparative material Nos. 5 (corresponding to a material currently used to a high pressure rotor) and 6 (corresponding to a material currently used to a low pressure rotor), an impact test was effected to specimens before subjected to a brittle treatment for 3000 h at 500°C and those after subjected to the treatment and a 50% fracture appearance transition temperature (FATT) was examined. An FATT of the comparative material No. 5 was increased (made brittle) from 119°C to 135°C ($\Delta$FATT = 16°C), an FATT of the material No. 6 was increased from -20°C to 18°C ($\Delta$FATT = 38°C) by the brittle treatment, whereas it was also confirmed that an FATT of the invented material No. 3 remained at 38°C before and after the brittle treatment and thus it was confirmed that this material was not made brittle.

The specimens Nos. 8 to 11 of the invented materials added with rare earth elements (La - Ce), Ca, Zr, and Al, respectively, have toughness improved by these rare earth elements. In particular, the addition of the rare earth elements is effective to improve the toughness. A material added with Y in addition to La - Ce was also examined and it was confirmed that Y was very effective to improve the toughness.

Table 3 shows the chemical compositions and creep rapture strength of the specimens prepared to examine an influence of oxygen to creep rapture strength of the invented materials. A method of melting and forging these specimens were the same as that of the above-mentioned specimens Nos. 1 to 11.

Table 3

| Specimen No. | Composition (wt%) | | | | | | | | | |
|---|---|---|---|---|---|---|---|---|---|---|
| | C | Si | Mn | P | S | Ni | Cr | Mo | V | O |
| 15 | 0.26 | 0.05 | 0.08 | 0.008 | 0.011 | 1.71 | 1.24 | 1.37 | 0.25 | 0.0004 |
| 16 | 0.23 | 0.04 | 0.10 | 0.009 | 0.011 | 1.60 | 1.24 | 1.37 | 0.25 | 0.0014 |
| 17 | 0.25 | 0.05 | 0.09 | 0.010 | 0.012 | 1.61 | 1.25 | 1.36 | 0.24 | 0.0019 |
| 18 | 0.24 | 0.05 | 0.12 | 0.008 | 0.010 | 1.65 | 1.20 | 1.38 | 0.24 | 0.0030 |
| 19 | 0.25 | 0.04 | 0.11 | 0.009 | 0.010 | 1.69 | 1.29 | 1.29 | 0.23 | 0.0071 |
| 20 | 0.23 | 0.06 | 0.09 | 0.010 | 0.012 | 1.72 | 1.30 | 1.32 | 0.25 | 0.0087 |

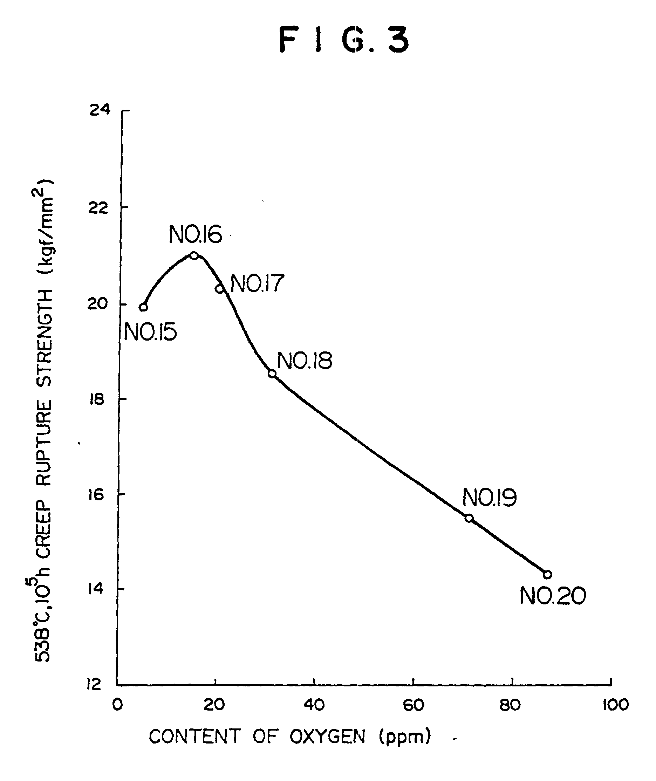

The specimens were quenched in such a manner that they were austenitized by being heated to 950°C and then by being cooled at a speed of 100°C/h. Next, they were annealed by being heated at 660°C for 40 hours. Table 4 shows 538°C creep rapture strength in the same manner as that shown in Table 2. Figure 3 is a graph showing a relationship between creep rupture strength and oxygen. It is found that a superior creep rupture strength not less than

about 12 kg/mm$^2$ can be obtained by making $O_2$ to a level not more than 100 ppm, further, a superior creep rupture strength not less than 15 kg/mm$^2$ can be obtained by making $O_2$ level thereof be not more than 80 ppm, and furthermore, a superior creep rupture strength not less than 18 kg/mm$^2$ can be obtained by making $O_2$ level thereof be not more than 40 ppm.

Table 4

| Specimen No. | $\frac{Mn}{Ni}$ | $\frac{Si+Mn}{Ni}$ | $\frac{V+Mo}{Ni+Cr}$ | Creep rupture strength (kgf/mm$^2$) |
|---|---|---|---|---|
| 15 | 0.047 | 0.076 | 0.55 | 19.9 |
| 16 | 0.063 | 0.088 | 0.57 | 21.0 |
| 17 | 0.056 | 0.087 | 0.56 | 20.3 |
| 18 | 0.073 | 0.103 | 0.57 | 18.5 |
| 19 | 0.065 | 0.089 | 0.51 | 15.6 |
| 20 | 0.052 | 0.087 | 0.52 | 14.3 |

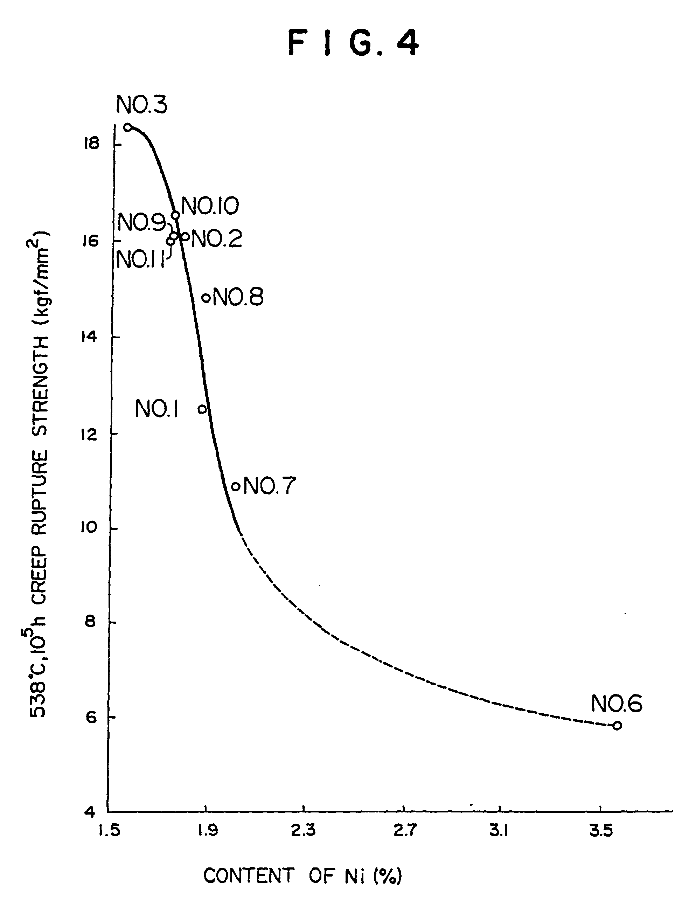

Figure 4 is a graph showing a relationship between 538°C, 10$^5$ hour creep rupture strength and an amount of Ni. As shown in Figure 4, the creep rupture strength is abruptly lowered as an amount of Ni is increased. In particular, a creep rupture strength not less than about 11 kg/mm$^2$ is exhibited when an amount of Ni is not more than about 2%, and in particular, a creep rupture strength not less than about 12 kg/mm$^2$ is exhibited when an amount of Ni is not more than 1.9%.

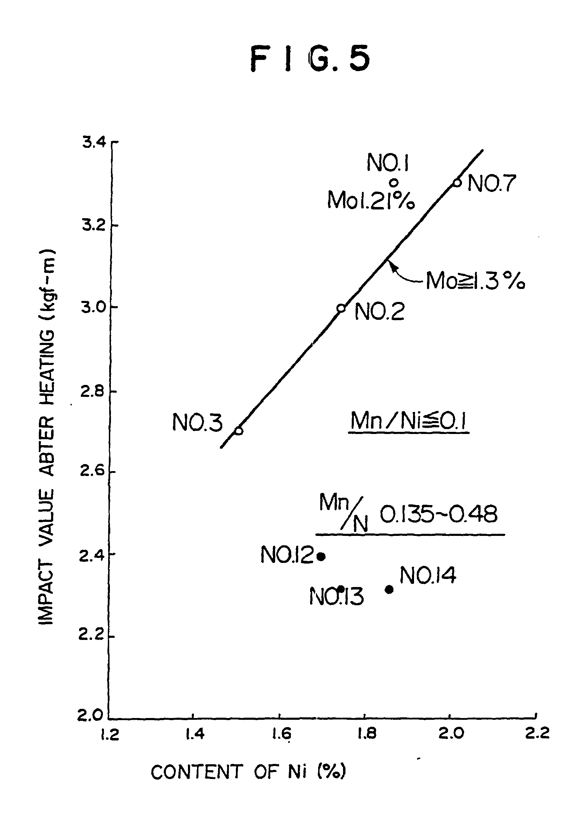

Figure 5 is a graph showing a relationship between an impact value and an amount of Ni after the specimens have been heated at 500°C for 3,000 hours. As shown in Figure 5, the specimens of the present invention in which a ratio (Si + Mn)/Ni is not more than 0.18 or in which another ratio Mn/Ni is not more than 0.1 can bring about high impact value by the increase in an amount of Ni, but the comparative specimens Nos. 12 to 14 in which a ratio (Si + Mn)/Ni exceeds 0.18 or in which another ratio Mn/Ni exceeds 0.12 have a low impact value not more than 2.4 kg-m, and thus an increase in the amount of Ni is little concerned with the impact value.

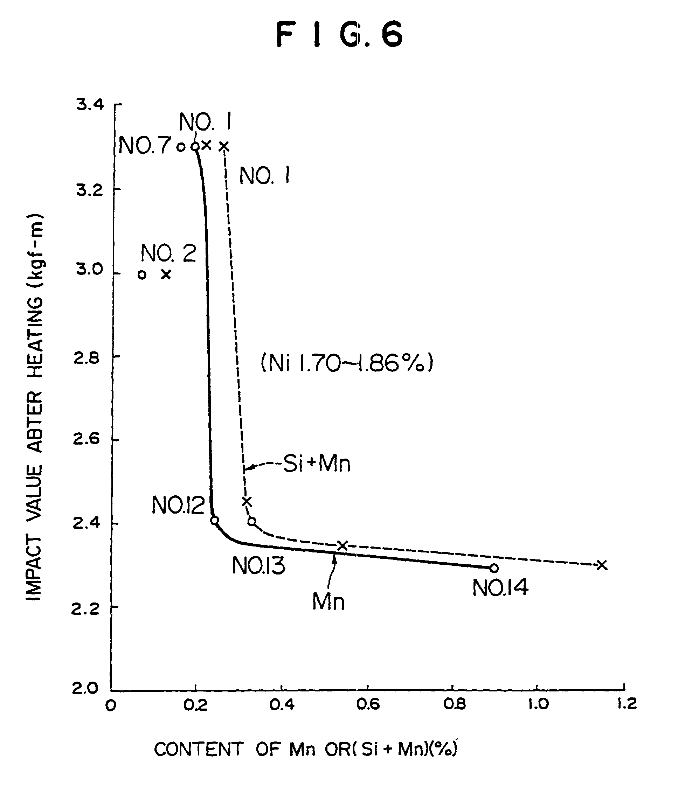

Likewise, Figure 6 is a graph showing a relationship between impact value after being subjected to heating embrittlement and an amount of Mn or an amount of Si + Mn of the specimens containing 1.6 to 1.9% of Ni. As shown in Figure 6, it is apparent that Mn or (Si + Mn) greatly influences the impact value at a particular amount of Ni. That is, the specimens have a very high impact value when an amount of Mn is not more than 0.2% or an amount of Si + Mn is not more than 0.25%.

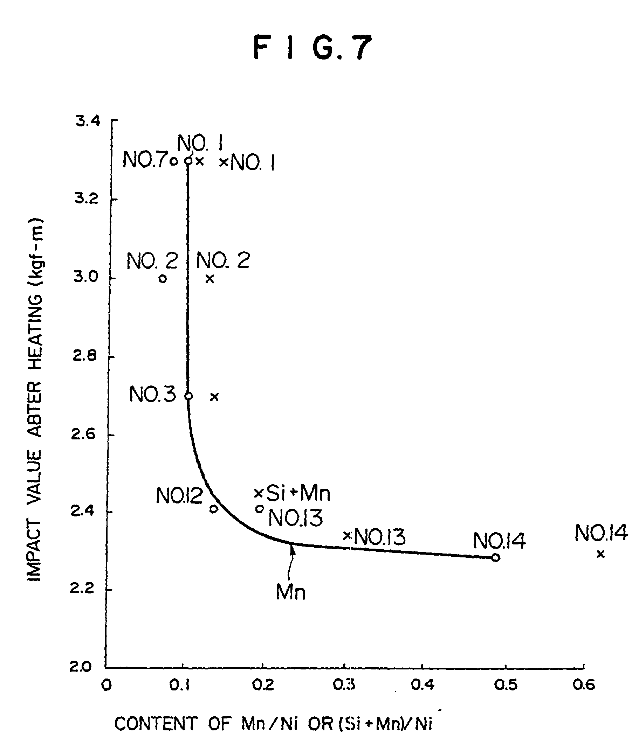

Likewise, Figure 7 is a graph showing a relationship between an impact value and a ratio Mn/Ni or a ratio (Si + Mn)/Ni of the specimens containing 1.52 to 2.0% Ni. As shown in Figure 7, a high impact value not less than 2.5kg-m is exhibited when a ratio Mn/Ni is not more than 0.12 or a ratio Si + Mn/Ni is not more than 0.18.

EXAMPLE 2

Table 5 shows typical chemical compositions (wt%) of specimens used in an experiment.

The specimens were obtained in such a manner that they were melted in a high frequency melting furnace, made to an ingot, and hot forged to a size of 30 mm square at a temperature from 850 to 1250°C. The specimens Nos. 21 and 22 were prepared for the comparison with the invented materials. The specimens Nos. 23 to 32 are rotor materials superior in toughness according to the present invention.

The specimens Nos. 23 to 32 were quenched in such a manner that they were austenitized being heated to 950°C in accordance with a simulation of the conditions of the center of a rotor shaft integrating high and low pressure portions of a steam turbine, and then cooled at a speed of 100°C/h. Next, they were annealed by being heated at 650°C for 50 hours and cooled in a furnace. Cr-Mo-V steel according to the present invention included no ferrite phase and was made to have a bainite structure as a whole.

An austenitizing temperature of the invented steels must be 900 to 1000°C. When the temperature was less than 900°C, creep rupture strength was lowered, although superior toughness can be obtained. When the temperature exceeded 1000°C, toughness was lowered, although superior creep rapture strength was obtained. An annealing temperature must be 630 to 700°C. If the temperature is less than 630°C superior toughness cannot be obtained, and when it exceeds 700°C, superior creep strength cannot be obtained.

Table 6 shows the results of a tensile strength test, impact test, and creep rupture test. Toughness is shown by Charpy impact absorbing energy of a V-shaped notch tested at 20°C and 50% fracture transition temperature (FATT).

The creep rupture test by a notch was effected using specimens each having a notch bottom radius of 66 mm, a notch outside diameter of 9 mm, and a V-shaped notch configuration of 45° (a radius of a notch bottom end) "r" is 0.16 mm).

Table 5

| Speci-men No. | Composition (wt%) | | | | | | | | | | | | (ppm) | $\frac{V+Mo}{Ni+Cr}$ | $\frac{Mn}{Ni}$ |
| | C | Si | Mn | P | S | Ni | Cr | Mo | W | V | Nb | Others | $O_2$ | | |
|---|---|---|---|---|---|---|---|---|---|---|---|---|---|---|---|
| 21 | 0.26 | 0.27 | 0.77 | 0.007 | 0.010 | 0.34 | 1.06 | 1.28 | – | 0.27 | – | – | 26 | 1.107 | 2.26 |
| 22 | 0.23 | 0.05 | 0.30 | 0.009 | 0.012 | 3.56 | 1.66 | 0.40 | – | 0.12 | – | – | 20 | 0.100 | 0.084 |
| 23 | 0.25 | 0.02 | 0.15 | 0.003 | 0.004 | 1.64 | 1.95 | 1.40 | – | 0.27 | – | – | 19 | 0.465 | 0.092 |
| 24 | 0.24 | 0.02 | 0.16 | 0.001 | 0.006 | 1.70 | 1.51 | 1.68 | – | 0.27 | 0.03 | – | 10 | 0.607 | 0.094 |
| 25 | 0.23 | 0.03 | 0.15 | 0.002 | 0.005 | 1.65 | 1.60 | 1.61 | 0.21 | 0.25 | – | – | 19 | 0.572 | 0.091 |
| 26 | 0.24 | 0.02 | 0.15 | 0.001 | 0.007 | 1.69 | 1.52 | 1.60 | 0.23 | 0.25 | 0.03 | – | 20 | 0.576 | 0.089 |
| 27 | 0.22 | 0.04 | 0.16 | 0.009 | 0.009 | 1.63 | 1.65 | 1.60 | 0.26 | 0.26 | – | Ti 0.03 B 0.004 | 21 | 0.567 | 0.098 |
| 28 | 0.24 | 0.06 | 0.15 | 0.005 | 0.007 | 1.65 | 1.57 | 1.68 | – | 0.23 | 0.05 | Ca 0.006 | 18 | 0.593 | 0.091 |
| 29 | 0.26 | 0.03 | 0.15 | 0.008 | 0.011 | 1.58 | 1.49 | 1.70 | – | 0.25 | 0.04 | La 0.08 Ce 0.09 | 16 | 0.633 | 0.094 |
| 30 | 0.23 | 0.05 | 0.14 | 0.006 | 0.008 | 1.71 | 1.51 | 1.65 | 0.27 | 0.25 | – | Al 0.006 | 16 | 0.590 | 0.082 |
| 31 | 0.26 | 0.08 | 0.13 | 0.007 | 0.006 | 1.80 | 1.50 | 1.73 | – | 0.24 | – | Ta 0.06 | 17 | 0.597 | 0.072 |
| 32 | 0.25 | 0.04 | 0.13 | 0.009 | 0.009 | 1.46 | 1.61 | 1.63 | 0.14 | 0.25 | – | Zr 0.31 | 15 | 0.612 | 0.089 |

Table 6

| Specimen No. | Tensile strength (kg/mm²) | Elongation (%) | Contrac- tion of area (%) | Impact absorbing energy (kg-m) | 50% FATT (°C) | 538°C Creep rupture strength (kgf/mm²) |
|---|---|---|---|---|---|---|
| 21 | 88.1 | 20.1 | 60.8 | 1.3 | 120 | 14.0 |
| 22 | 72.4 | 25.2 | 75.2 | 12.0 | -20 | 6.5 |
| 23 | 88.9 | 21.4 | 70.7 | 8.7 | 35 | 17.5 |
| 24 | 89.0 | 21.9 | 71.3 | 9.5 | 28 | 18.9 |
| 25 | 88.1 | 23.1 | 73.0 | 5.8 | 39 | 19.2 |
| 26 | 88.3 | 21.8 | 72.3 | 7.2 | 34 | 18.3 |
| 27 | 89.5 | 21.5 | 71.4 | 10.6 | 5 | 19.1 |
| 28 | 88.2 | 22.2 | 72.5 | 11.7 | -2 | 18.8 |
| 29 | 88.5 | 22.7 | 72.8 | 13.7 | -9 | 19.2 |
| 30 | 91.8 | 20.0 | 70.2 | 10.7 | 3 | 18.4 |
| 31 | 91.3 | 20.1 | 70.2 | 11.8 | -3 | 19.3 |
| 32 | 90.8 | 20.6 | 70.6 | 10.8 | 0 | 18.5 |

Creep rupture strength is determined by a Larson Mirror method and shown by strength obtained when a specimen was heated at 538°C for $10^5$ hours. As apparent from Table 6, the invented materials have a tensile strength not less than 88 kg/mm$^2$ at a room temperature, an impact absorbing energy not less than 5 kg/mm$^2$, a 50% FATT not more than 40°C, and a creep rupture strength of 17 kg/mm$^2$, and thus they are very useful for a turbine rotor integrating high and low pressure portions.

These invented steels have greatly improved toughness as compared with that of the material (specimen No. 21) corresponding to a material currently used to a high pressure rotor (having a high impact absorbing energy and a low FATT). Further, they have a 538°C, $10^5$ hour notch creep rupture strength superior to that of the material (specimen No. 22) corresponding to a material currently used to a low pressure rotor.

In the relationship between a ratio of a sum of V and Mo as carbide creating elements to a sum of Ni and Cr as quenching ability improving elements, and creep rapture strength and impact absorbing energy, the creep rupture strength is increased as the component ratio (V + Mo)/(Ni + Cr) is increased until it becomes about 0.7. The impact absorbing energy is lowered as the component ratio is increased. The toughness (vE20 > 2.5 kg-m) and the creep rupture strength (R > 11 kg/mm$^2$) necessary as the turbine rotor integrating high and low pressure portions are obtained when (V + Mo)/(Ni + Cr) is made to be in the range of 0.45 to 0.7. Further, to examine brittle characteristics of the invented materials and the comparative material No. 21 (corresponding to a material currently used to a high pressure rotor) and the comparative material No. 22 (corresponding to a material currently used to a low pressure rotor), an impact test was effected to specimens before subjected to a brittle treatment at 500°C for 3000 h and those after subjected to the treatment and a 50% fracture transition temperature (FATT) was examined. As a result, an FATT of the comparative material No. 21 was increased (made brittle) from 119°C to 135°C (ΔFATT = 16°C), an FATT of the material, No. 2 was increased from -20°C to 18°C (ΔFATT = 38°C) by the brittle treatment, whereas it was also confirmed that an FATT of the invented materials were 39°C both before and after subjected to the brittle treatment and thus it was confirmed that they were not made brittle.

The specimens Nos. 27 to 32 of the invented materials added with rare earth elements (La - Ce), Ca, Zr, and Al, respectively, have toughness improved thereby. In particular, an addition of the rare earth elements is effective to improve the toughness. A material added with Y in addition to La - Ce was also examined and it was confirmed that Y was very effective to improve the toughness.

As a result of an examination of an influence of oxygen to creep rupture strength of the invented materials, it is found that a superior strength not less than about 12 kg/mm$^2$ can be obtained by making $O_2$ to be in a level not more than 100 ppm, further, a superior strength not less than 15 kg/mm$^2$ can be obtained at a level thereof not more than 800 ppm, and, furthermore, a superior strength not less than 18 kg/mm$^2$ can be obtained at a level thereof not more than 400 ppm.

As a result of an examination of the relationship between 538°C, $10^5$ hour creep rupture strength and an amount of Ni, it is found that the creep rupture strength is abruptly lowered as an amount of Ni is increased. In particular, a strength not less than about 11 kg/mm$^2$ is exhibited when an amount of Ni is not more than about 2%, and in particular, a strength not less than about 12 kg/mm$^2$ is exhibited when an amount of Ni is not more than 1.9%.

Further, as a result of an examination of a relationship between impact value and an amount of Ni after the specimens have been heated at 500°C for 3000 hours, the specimens according to the present invention in which the ratio (Si + Mn)/Ni is not more than 0.18 bring about high impact values by the increase in an amount of Ni, but the comparative specimens in which the ratio (Si + Mn)/Ni exceeds 0.18 have a low impact value not more than 2.4 kg/mm$^2$, and thus an increase in the amount of Ni is little concerned with the impacts value.

As a result of an examination of a relationship between impact value and an amount of Mn or an amount of Si + Mn of the specimens containing 1.6 to 1.9% of Ni, it is found that Mn or Si + Mn greatly influences the impact value at a particular amount of Ni, and the specimens have a very high impact value when an amount of Mn is not more than 0.2% or an amount of Si + Mn is in a range from 0.07 to 0.25%.

As a result of an examination of a relationship between impact value and a ratio Mn/Ni or a ratio (Si + Mn)/Ni of the specimens containing 1.52 to 2.0% of Ni, a high impact value not less than 2.5 kg/mm$^2$ is exhibited when the ratio Mn/Ni is not more than 0.12 or the ratio (Si + Mn)/Ni is in a range from 0.04 to 0.18.

EXAMPLE 3

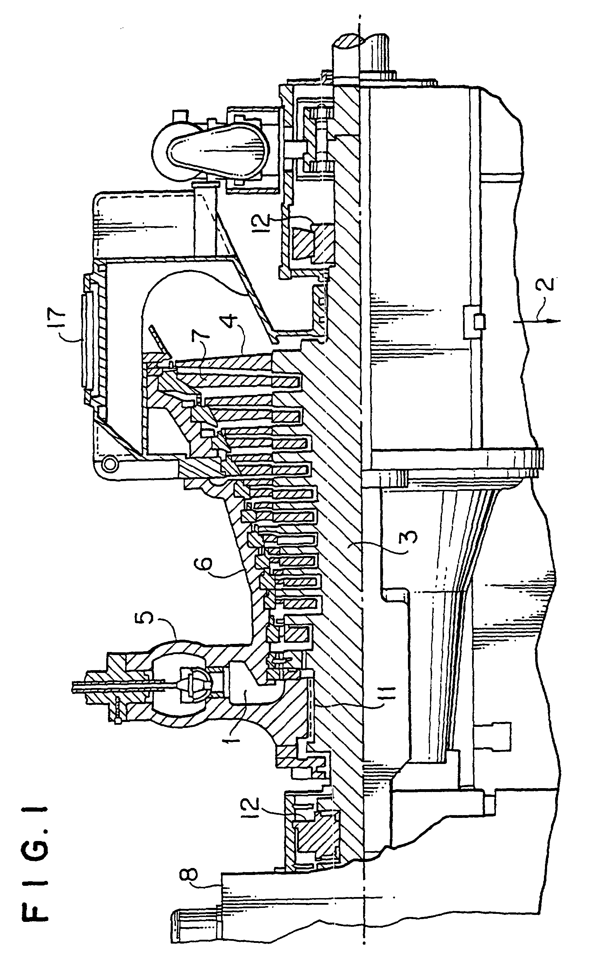

Figure 1 shows a partial cross sectional view of a steam turbine integrating high and low pressure portions according to the present invention. A conventional steam turbine consumes high pressure and temperature steam of 80 at and 480°C at the main steam inlet thereof and low temperature and pressure steam of 722 mmHg and 33°C at the exhaust portion thereof by a single rotor thereof, whereas the steam turbine integrating high and low pressure portions of the invention can increase an output of a single turbine by increasing a pressure and temperature of steam at the main steam inlet thereof to 100 at and 536°C, respectively. To increase an output of the single turbine, it is necessary to increase a blade length of movable blades at a final stage and to increase a flow rate of steam. For example, when a blade length of the movable blade at a final stage is increased from 26 inches to 33.5 inches, an ring-shaped band area is increased by about 1.7 times. Consequently, a conventional output of 100 MM is increased to 170 MW, and further when a blade length is increase to 40 inches, an output per a single turbine can be increased by 2 times or more.

When a Cr-Mo-V steel containing 0.5% of Ni is used for a rotor integrating high and low pressure portions as a material of the rotor shaft having blades of a length not less than 33.5 inches, this rotor material can sufficiently withstand an increase in a steam pressure and temperature at the main stream inlet thereof, because this steel is superior in high temperature strength and creep characteristics to be thereby used at a high temperature region. In the case of a long blade of 26 inches, however, tangential stress in a low temperature region, in particular, tangential stress occurring at the center hole of the turbine rotor at a final stage movable blade portion is about 0.95 in a stress ratio (operating stress/allowable stress) when the rotor is rotated at a rated speed, and in the case of a long blade of 33.5 inches, the tangential stress is about 1.1 in the stress ratio, so that the above steel is intolerable to this application.

On the other hand, when 3.5% Ni-Cr-Mo-V steel is used as a rotor material, the above stress ratio thereof is about 0.96 even when long blades of 33.5 inches are used, because this material has toughness in the low temperature region, and tensile strength and yield strength which are 14% higher than those of the Cr-Mo-V steel. However, if long blades of 40 inches are used, the above stress ratio is 1.07, and thus this rotor material is intolerable to this application. Since this material has creep rupture stress in the high temperature region which is about 0.3 times that of the CR-Mo-V steel and thus it is intolerable to this application due to lack of high temperature strength.

To increase an output as described above, it is necessary to provide a rotor material which simultaneously has both superior characteristics of the Cr-Mo-V steel in a high temperature region and superior characteristics of the Ni-Cr-Mo-V steel in a low temperature region.

When a long blade of a class from 30 to 40 inches is used, a material having a tensile strength not less than 88 $kgf/mm^2$ is necessary, because conventional Ni-Cr-Mo-V steel (ASTM A470 Class 7) has the stress ratio of 1.07, as described above.

Further, a material of a steam turbine rotor integrating high and low pressure portions on, which long blades not less than 30 inches are attached must have a 538°C, $10^5$ h creep rupture strength not less than 15 $kg/mm^2$ from a view point of securing safety against high temperature breakdown on a high pressure side, and an impact absorbing energy not less than 2.5 kg-m/ $cm^2$ (3 $kg-m/cm^2$) from a view point of securing safety against breakdown due to brittleness on a low pressure side.

From the above view point, in the invention there was obtained heat resisting steels which can satisfy the above requirements and which increase an output per a single turbine.

The steam turbine according to the present invention includes thirteen stages of blades 4 planted on a rotor shaft 3 integrating high and low pressure portions, and steam having a high temperature and pressure of 538°C and 88 at, respectively, is supplied from a steam inlet 1 through a steam control valve 5. The steam flows in one direction from the inlet 1 with the temperature and pressure thereof being decreased to 33°C and 722 mm Hg, respectively and then discharged from an outlet 2 through final stage blades 4. Since the rotor shaft 3 integrating high and low pressure portions according to the present invention is exposed to a steam temperature ranging from 538°C to 33°C, forged steel composed of Ni-Cr-Mo-V low alloy steel having the characteristics describedin the example 1 is used. The portions of the rotor shaft 3 where the blades 4 are planted are formed to a disk shape by integrally machining the rotor shaft 3. The shorter the blade is, the longer the disk portion, whereby the vibration thereof is reduced.

The rotor shaft 3 according to the present invention was manufactured in such a manner that cast ingot having the alloy compositions of the specimen No. 16 shown in the example 1 and the specimen No. 24 shown in the example 2, respectively was electro-slug remelted, forged to a shaft having a diameter of 1.2 m, heated at 950°C for 10 hours, and then the shaft was cooled at a cooling speed of 100°C/h by spraying water while the it is rotated. Next, the shaft was annealed by being heated at 665°C for 40 hours. A test piece cut from the center of the rotor shaft was subjected to a creep test, an impact test of a V-shaped notch (a cross sectional area of the specimen: 0.8 cm2) before the specimen was heated and after it had been heated (after it had been heated at 500°C for 300 hours), and a tensile strength test, and values substantially similar to those of the examples 1 and 2 were obtained.

Each portion of the present examples are fabricated from a material having the following composition.

(1) Blade

Blades composed of three stages on a high temperature and pressure side have a length of about 40 mm in an axial direction and are fabricated from forged martensitic steel consisting, by weight, of 0.20 to 0.30% C, 10 - 13% Cr, 0.5 to 1.5% Mo, 0.5 to 1.5% W, 0.1 to 0.3% V, not more than 0.5% Si, not more than 1% Mn, and the balance Fe and incidental impurities.

Blades at an intermediate portion, of which length is gradually made longer as they approach a low pressure side, are fabricated from forged martensitic steel consisting, by weight, of 0.05 to 0.15% C, not more than 1% Mn, not more than 0.5% Si, 10 to 13% Cr, not more than 0.5% Mo, not more than 0.5% Ni, and the balance Fe and incidental impurities.

Blades having a length of 850 mm at a final stage, ninety pieces of which were planted around one circumference of a rotor were fabricated from forged martensitic steel consisting, by weight, of 0.08 to 0.15% C, not more than 1% Mn, not more than 0.5% Si, 10 to 13% Cr, 1.5 to 3.5% Ni, 1 to 2% Mo, 0.2 to 0.5% V, 0.02 to 0.08% N, and the balance Fe and incidental impurities. An erosion-preventing shield plate fabricated from a stellite plate was welded to the leading edge of the final stage at the terminal end thereof. Further, a partial quenching treatment was effected regarding portions other than the shield plate. Furthermore, a blade having a length not less than 1016 mm may be fabricated from Ti alloy containing 5 to 7% Al and 3 to 5% V.

Each of 4 to 5 pieces of these blades in the respective stages was fixed to a shroud plate through tenons provided at the extreme end thereof and caulked to the shroud plate made of the same material as the blades.

The 12% Cr steel shown above was used to provide a blade which was rotated at 3000 rpm even in a case of its length of 1016 mm. Although Ti alloy was used when a blade having a length of 1016 mm was rotated at 3600 rpm, the 12% Cr steel was used to provide a blade having a length up to 850 mm and being rotated at 3600 rpm.

(2) Stationary blades 7 provided in the first to third stages at the high pressure side were fabricated from martensitic steel having the same composition as those of the corresponding movable blades and stationary blades other than those of the first to third stages were fabricated from martensitic steel having the same composition as those of the movable blades at the intermediate portion.

(3) A casing 6 was fabricated from Cr-Mo-V cast steel comprising by weight 0.15 to 0.3% C, not more than 0.5% Si, not more than 1% Mn, 1 to 2% Cr, 0.5 to 1.5% Mo, 0.05 to 0.2% V, and not more than 0.1% Ti.

Designated at 8 is a generator capable of generating an output of 100,000 to 200,000 KW. In the present examples, a distance between bearings 12 of the rotor shaft was about 520 cm, an outside diameter of a final blade was 316 cm, and a ratio of the distance between bearings to the outside diameter was 1.65. The generator had a generating capacity of 100,000 KW. A distance between the bearings was 0.52 m per 10,000 KW.

Further, in the present examples, when a blade 1016mm was used at a final stage, an outside diameter thereof was 365 cm, and thus a ratio of a distance between bearings to this outside diameter was 1.43, whereby an output of 200,000 KW was generated with a distance between the bearings being 0.26 m per 10,000 KW.

In these cases, a ratio of an outside diameter of a portion of the rotor shaft where the blades were planted to a length of the final stage blade is 1.70 for a blade of 850 mm and 1.71 for a blade of 1016 mm.

In the present examples, steam having a temperature of 566°C was applicable, and pressures thereof of 121, 169, or 224 at were also applicable.

EXAMPLE 4

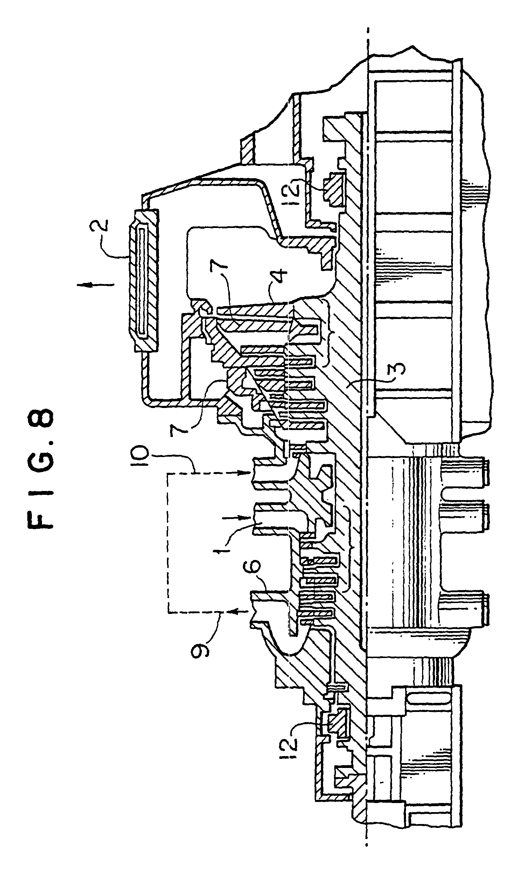

Figure 8 is a partially taken-away sectional view of an arrangement of a reheating type steam turbine integrating high and low pressure portions. In this steam turbine, steam of 538°C and 126 at was supplied from an inlet 1 and discharged from an outlet 9 through a high pressure portion of a rotor 3 as steam of 367°C and 38 at, and further steam having been heated to 538°C and to a pressure of 35 at was supplied from an inlet 10, flowed to a low pressure portion of the rotor through an intermediate pressure portion thereof, and discharged from an outlet 2 as steam having a temperature of about 46°C and a pressure of 0.1 at. A part of the steam discharged from the outlet 9 is used as a heat source for the other purpose and then again supplied to the turbine from the inlet 10 as a heat source therefor. If the rotor for the steam turbine integrating high and low pressure portions is fabricated from the material of the specimen No. 5 of the example 1, the vicinity of the steam inlet 1, i.e., a portion a will have sufficient high temperature strength, however, since the center of the rotor 3 will have a high ductility-brittle transition temperature of 80 to 120°C, there will be caused such drawback that, when the vicinity of the steam outlet 2, i.e., a portion b has a temperature of 50°C, the turbine is not sufficiently ensured with respect to safety against brittle fracture. On the other hand, if the rotor 3 is fabricated from the material of the specimen No. 6, safety against brittle fracture thereof at the vicinity of the steam outlet 2, i.e., the portion b will be sufficiently ensured, since a ductility-brittle transition temperature at the center of the rotor 3 is lower than a room temperature, however, since the vicinity of the steam inlet 1, i.e., the portion a will have insufficient high temperature strength and since the alloy constituting the rotor 3 contains a large amount of Ni, there will be such a drawback that the rotor 3 is apt to become brittle when it is used (operated) at a high temperature for a long time. More specifically, even if any one of the materials of the specimens Nos. 5 and 6 is used, the steam turbine rotor integrating high and low pressure portions made of the material composed of the specimens No. 5 or 6 has a certain disadvantage, and thus it cannot be practically used. Note that, in Figure 8, 4 designates a movable blade, 7 designates a stationary blade, and 6 designates a casing, respectively. A high pressure portion was composed of five stages and a low pressure portion was composed of six stages.

In this example, the rotor shaft 3, the movable blades 4, the stationary blades 7, and the casing 6 were formed of the same materials as those of the above-mentioned example 3. The movable blade at a final stage had a length not less than 33.5 inches and was able to generate an output of 120,000 KW. Similar to the example 3, 12% Cr steel or Ti alloy steel is used for this blade having length of not less than 33.5 inches. A distance between bearings 12 was about 454 cm, a final stage blade of 33.5 inches in length had a diameter of 316 cm and a ratio of the distance between the bearings to this outside diameter was 1.72. When a final stage blade of 40 inches in length was used, an output of 200,000 KW was generated. The blade portion thereof had a diameter of 365 cm and a ratio of a distance between bearings to this diameter was 1.49. A distance between the bearings per a generated output of 10,000 KW in the former of 33.5 inches was 0.45 m and that in the latter of 40 inches was 0.27 m. The above mentioned steam temperature and pressures were also applicable to this example.

EXAMPLE 5

The rotor shaft integrating high and low pressure portions according to the present invention was also able to be applied to a single flow type steam turbine in which a part of steam of an intermediate pressure portion of a rotor shaft was used as a heat source for a heater and the like. The materials used in the example 3 were used regarding the rotor shaft, movable blades, stationary blades and casing of this example.

EXAMPLE 6

The steam turbines described in the examples 3 to 5 were directly connected to a generator, and a gas turbine was directly connected the generator. A steam turbine of this example was applied to a combined generator system, wherein steam was generated by a waste-heat recovery boiler using exhaust combustion gas occurring in the gas turbine and the steam turbine was rotated by the steam. The gas turbine generated an output of about 40,000 KW and the steam turbine generated an output of about 60,000 KW, and thus this combined generator system generated a total output of 100,000 KW. Since the steam turbine of this example was made compact, it was manufactured at a cost lower than that of a conventional large steam turbine supposing that they have the same generating capacity and it has an advantage of being economically operated when an output to be generated fluctuates.

In the gas turbine, air compressed by a compressor was fed in a burner to produce a combustion gas having a high temperature not less than 1100°C and a disc on which blades were planted was rotated by the combustion gas. The disc was formed of three stages, wherein a movable blade was fabricated from Ni base cast alloy containing by weight 0.04 to 0.1% C, 12 to 16% Cr, 3 to 5% Al, 3 to 5% Ti, 2 to 5% Mo, and 2 to 5% Ni and a stationary blade was fabricated from Co base cast alloy containing by weight 0.25 to 0.45 C, 20 to 30% Cr, 2 to 5% at least one selected from the group consisting of Mo and W, and 0.1 to 0.5% at least one selected from the group consisting of Ti and Nb. A burner liner was fabricated from FE-Ni-Cr austenitic alloy containing by weight 0.05 to 0.15% C, 20 to 30% Cr, 30 to 45% Ni, 0.1 to 0.5% at least one selected from the group consisting of Ti and Nb, and 2 to 7% at least one selected from the group consisting of Mo and W. A heat shielding coating layer made of a $Y_2O_2$ stabilizing zirconia sprayed onto the outer surface of the liner was provided to the flame side of the liner. Between the Fe-Ni-Cr austenitic alloy and the zirconia layer was disposed a MCrAlY alloy layer consisting, by weight, of 2 to 5% Al, 20 to 30% Cr, 0.1 to 1% Y, and at least one selected from the group consisting of Fe, Ni and Co, that is, M is at least one selected from the group consisting of Fe, Ni and Co.

An Al-diffused coating layer was provided on the movable and stationary blades shown above.

A material of the turbine disc was fabricated from a martensitic forged steel containing by weight 0.15 to 0.25% C, not more than 0.5% Si, not more than 0.5% Mn, 1 to 2% Ni, 10 to 13% Cr, 0.02 to 0.1% at least one selected from the group consisting of Nb and Ta, 0.03 to 0.1% N, and 1.0 to 2.0% Mo; a turbine spacer, distant piece and compressor disc at a final stage being fabricated from the same martensitic steel, respectively.

EXAMPLE 7

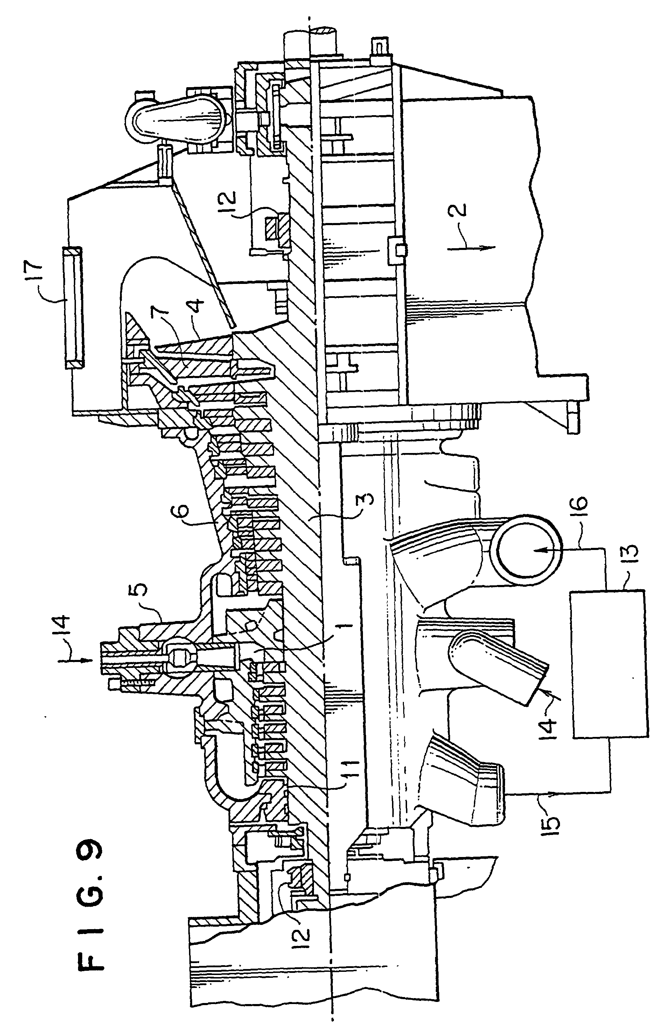

Figure 9 is a partially sectional view of a steam turbine integrating high and low pressure portions according to the present invention. A rotor shaft integrating high and low pressure portions 3 used in this example was fabricated from the Ni-Cr-MO-V steel having the banite structure as a whole described in the example 3. The left side is a high pressure side and the right side is a low pressure side in Figure 9, and a final stage blade had a length of 33.5 or 40 inches. Blades on the left high pressure side were made of the same material as that described in the example 3 and final stage blades were made of the same material as that described in the Example 3. Steam of this example had a temperature of 538°C and a pressure of 102 kg/cm$^2$ at an inlet and had an temperature no more than 46°C and a pressure not more than an atmospheric pressure at an outlet, which steam was supplied to a condenser as shown by numeral 2. A material of the rotor shaft of this example had an FATT not more than 40°C, a V-shaped notch impact value at a room temperature not less than 4.8 kgf-mm$^2$ (a cross sectional area: not less than 0.8 cm$^2$), a tensile strength

at a room temperature not less than 81 kgf/mm$^2$, a 0.2 yield strength not less than 63 kgf/mm$^2$, an elongation not less than 16%, a contraction of area not less than 45 percent, and a 538°C, 10$^5$ hour creep rupture strength not less than 11 kgf/mm$^2$. Steam was supplied from an inlet 14, discharged from an outlet 15 through high pressure side blades, again supplied to a reheater 13, and supplied to a low pressure side as high temperature steam of 538°C and 35 atg. Designated at 12 are bearings disposed at the opposite sides of the rotor shaft 3, and a distance between bearings was about 6 m. The rotor of this example rotated at 3600 rpm and generated an output of 120,000 KW. Blades 4 were composed of six stages on the high pressure side and ten stages on the low pressure side. In this example, a distance between bearings was 0.5 m per a generated output of 10,000 KW, and thus the distance was about 40% shorter than a conventional distance of 1.1 m.

Further, in this example, a final stage blade of 33.5 inches had a diameter of 316 cm and thus a ratio of a distance between the bearings to this outside diameter was 2.22. In another case, a final stage blade of 40 inches having a diameter of 365 cm was used, a ratio of the distance between the bearings to the diameter being 1.92, which enables an output of 200,000 KW to be generated. As a result, a distance between the bearings per a generated output of 10,000 KW was 0.3 m in this another case, whereby the steam turbine was able to be made very compact.

**Claims**

1.  A combined generator system having a single generator (8) simultaneously driven by both a steam turbine and a gas turbine, said steam turbine having a rotor (3) provided with an integrated rotor shaft, multi-stage blades (4) planted on the integrated rotor shaft from a high pressure side to a low pressure side of steam, and a casing (6) covering said rotor (3), a steam temperature at a steam inlet (1) toward the first stage blades (4) thereof being not less than 530°C and a steam temperature at the steam outlet (2) of the final stage blades thereof being not more than 100°C, said casing (6) being integrally arranged from the high pressure side of said blades (4) to the low pressure side thereof, a ratio (L/D) of a length (L) defined between bearings (12) of said rotor shaft to a diameter (D) measured between the terminal ends of said blades (4) disposed at the final stage thereof being 1.4 to 2.3, and said blades (4) at least at the final stage thereof having a length not less than 762 mm (30 inches).

2.  Generator system according to claim 1,
    **characterized in that**
    the generated output of the steam turbine is not less than 60,000 KW, and a distance between the bearings (12) per generated output of 10,000 KW ranges from 0.25 to 0.8 m.

3.  Generator system according to claim 1 or 2,
    **characterized in that**
    the direction of the steam flowing in the high pressure turbine portion is contrary to the direction of the steam flowing in the medium pressure portion and in the low pressure portion.

**Patentansprüche**

1.  Kombiniertes Generatorsystem mit einem einzigen, sowohl von einer Dampfturbine als auch von einer Gasturbine simultan angetriebenen Generator (8), wobei die Dampfturbine einen Rotor (3) mit einer integrierten Rotorwelle, mehrstufige, von einer Seite mit hohem Dampfdruck zu einer Seite mit niedrigem Dampfdruck an der integrierten Rotorwelle befestigte Schaufeln (4) und ein den Rotor (3) bedeckendes Gehäuse (6) aufweist, die Dampftemperatur an einem Dampfeinlaß (1) zur ersten Stufe von Schaufeln (4) nicht weniger als 530°C und an einem Dampfauslaß (2) der letzten Stufe von Schaufeln nicht mehr als 100°C beträgt, das Gehäuse (6) von der Hochdruckseite der Schaufeln (4) zu ihrer Niederdruckseite einstückig aufgebaut ist, das Verhältnis (L/D) zwischen dem Abstand (L) zwischen den Lagern (12) der Rotorwelle und dem zwischen den Abschlußenden der in der letzten Stufe angeordneten Schaufeln (4) gemessenen Durchmesser (D) 1,4 bis 2,3 beträgt und die Schaufeln (4) zumindest in der letzten Stufe eine Länge von nicht weniger als 762 mm (30 Zoll) aufweisen.

2.  Generatorsystem nach Anspruch 1,
    **dadurch gekennzeichnet, daß**
    der erzeugte Ausgang der Dampfturbine nicht weniger als 60.000 KW und der Abstand zwischen den Lagern (12) pro erzeugtem Ausgang von 10.000 KW 0,25 bis 0,8 m betragen.

3.  Generatorsystem nach Anspruch 1 oder 2,

**dadurch gekennzeichnet, daß**

die Strömungsrichtung des Dampfs im Turbinenabschnitt mit hohem Druck der Strömungsrichtung des Dampfs im Abschnitt mit mittlerem Druck und im Abschnitt mit niedrigem Druck entgegengesetzt ist.

## Revendications

1. Système générateur combiné ayant un générateur unique (8) entraîné simultanément par une turbine à vapeur et une turbine à gaz, ladite turbine à vapeur ayant un rotor (3) muni d'un arbre de rotor intégré, d'aubes en plusieurs étages (4) plantées sur l'arbre de rotor intégré à partir d'un côté haute pression vers un côté basse pression de vapeur, et d'un carter (6) recouvrant ledit rotor (3), une température de vapeur à une entrée de vapeur (1) vers ses aubes de première étage (4) n'étant pas inférieure à 530°C, et une température de vapeur à la sortie de vapeur (2) de ses aubes d'étage final n'étant pas supérieure à 100°C, ledit carter (6) étant agencé en un seul bloc à partir du côté haute pression desdites aubes (4) vers le côté basse pression de celles-ci, un rapport (L/D) d'une longueur L définie entre des paliers (12) dudit arbre de rotor sur un diamètre (D) mesuré entre les extrémités terminales desdites aubes (4) disposées dans son étage final étant de 1,4 à 2,3, et lesdites aubes (4), au moins dans son étage final, ayant une longueur non inférieure à 762 mm (30 pouces).

2. Système générateur selon la revendication 1, **caractérisé en ce que** la puissance générée de la turbine à vapeur n'est pas inférieure à 60 000 KW, et une distance entre les paliers (12) par puissance générée de 10 000 KW est située dans la plage allant de 0,25 à 0,8 m.

3. Système générateur selon la revendication 1 ou 2, **caractérisé en ce que** la direction de la vapeur s'écoulant dans la partie de turbine haute pression est contraire à la direction de la vapeur s'écoulant dans la partie moyenne pression et dans la partie basse pression.

F I G. 1

# F I G. 2

F I G. 3

# F I G. 4

# F I G. 5

# FIG.6

# F I G. 7

# F I G. 8

EP 0 849 434 B1

# FIG.9